# EUROPEAN PATENT APPLICATION

(11) **EP 2 832 213 A1**
(43) Date of publication of application: **04.02.2015**
(21) Application number: 13179008.1
(22) Date of filing: 01.08.2013
(51) Int. Cl.: A01K 1/12

(54) **Milking device for milking livestock and method of milking livestock**

(71) Applicant: Europe Dairy Systems, 3899 BR Zeewolde (NL)
(72) Inventor: Schut, Rutger, 3899BR Zeewolde (NL)
(74) Representative: Doolaar, Frans

(57) **Abstract**

The invention relates to a milking device (1) for milking livestock whereby personnel connects milking means to teats of the livestock comprising:
- a platform (3) for supporting the livestock;
- milking means (11), for milking the livestock; and
- lifting means (4), arranged for in use changing the position of the platform between a working position at a height relative to the position of the personnel suitable for the personnel to connect the milking means to the teats and at least one of a loading position in which the livestock can walk onto the platform and an unloading position in which the livestock can leave the platform.

The invention further relates to a method of milking livestock.

## Description

The invention relates to a milking device for milking livestock and to a method of milking livestock.

In many agricultural settings, animals are held as livestock for various reasons. Such reasons can be the production of products, e.g. dairy products and/or meat. In such a setting, the livestock is frequently examined or connected to certain devices for various purposes, such as milking. This frequently involves kneeling of the personnel.

For the personnel, kneeling close to livestock can be dangerous because of possible unsuspected movements by the livestock, especially in a situation where the livestock is not restrained. Additionally, kneeling in general increases the risk of injuries, such as lower-back pains. Both risks are especially relevant for agricultural companies with a relatively large population of livestock, since it requires the personnel to kneel quite often or for a long time. For both reasons, milking devices are used in the form of semi-permanent milking parlours (also known as mobile milking parlours). These semi-permanent milking parlours are used with ramps. The livestock walks up an ascending ramp onto a livestock platform. The livestock platform is at such a height relative to the surface on which both the semi-permanent milking parlour and the personnel stand, that the platform is at a height of approximately 1 meter to the surface on which the personnel stands. The personnel then connects clusters to the teats of the livestock. After milking, the personnel disconnects the clusters again and the livestock leaves the semi-permanent milking parlour by walking down a descending ramp.

While walking up or down the ramps, the livestock may fall from the ramps or slide down, especially when it rains, when the ramps get dirty or when the animals from the livestock push each other. In all cases the livestock may be injured. The injuries may be fractures or other injuries. Apart from animal suffering, this is bad for the profitability of the agricultural business keeping the livestock.

It is an object of the invention to provide a milking device for accommodating the livestock wherein the above stated drawbacks are reduced or even obviated.

This object is achieved with a milking device for milking livestock whereby personnel connects milking means to teats of the livestock comprising:
- a platform for supporting the livestock;
- milking means, for milking the livestock; and
- lifting means, arranged for in use changing the position of the platform between a working position at a height relative to the position of the personnel suitable for the personnel to connect the milking means to the teats and at least one of a loading position in which the livestock can walk onto the platform and an unloading position in which the livestock can leave the platform.

Because the lifting means are arranged to change the position of the platform between the loading position and the working position, or between the working position and the unloading position, the position of the livestock supported by the platform also changes relative to the position of the personnel.

The skilled person will appreciate that a position wherein the milking means can be connected to the teats is also a position wherein the milking means can be disconnected from the teats.

Because the position of the livestock changes, the working position and the loading position or the unloading position are independent. Therefore, the need for a ramp is absent while the personnel can conveniently work with the milking means.

Without the ascending ramp and the descending ramp, the milking device also fits in a smaller area, which means that it can be placed more easily.

When the lifting means are arranged to change the position of the platform between the working position and the loading position, the milking device is suited for a use wherein the livestock enters the platform in the loading position. As a next step, the position of the platform may be changed to the working position and the personnel may connect the milking means to the teats.

When the lifting means are arranged to change the position of the platform between the working position and the unloading position, the milking device is suited for a use wherein the milking means are disconnected by personnel from the teats while the platform is in the working position. The position of the platform, with the livestock on it may then be changed to the unloading position.

In a preferred embodiment, the lifting means comprise hydraulic, electric or pneumatic lifting means.

Using these kinds of lifting means ensures a relatively controlled and easy change of the position of the platform. Substantial physical labor to be performed by personnel using the milking device changing the position of the platform is not required. This means that the operation of the milking device may be more convenient in comparison to milking devices with other types of lifting means.

In another preferred embodiment, the milking device further comprises guiding means, for guiding the platform while changing the position.

In order to further control the change of the position of the platform when using the lifting means, it is preferred to use guiding means for guiding the platform while changing the position of the platform. Such guiding means may for instance comprise a wheel, rotably attached to the platform, engaged in a rail. This rail may for instance be part of the frame. Preferably, guiding means are arranged at multiple positions in the milking device, for instance at each of the parts of the platforms adjacent to the frame.

In another preferred embodiment, the milking device further comprises locking means for locking the platform to the frame in the working position or the at least one of a loading position and an unloading position.

By locking the platform to the frame with locking means, the position of the platform is secured or stabilized.

Especially in a situation where livestock is accommodated on the platform, failure of the lifting means whereby the platform for instance suddenly drops may cause injuries to the livestock. It is therefore preferred to use locking means. Such locking means can comprise latches, hooks, pins, magnetic locks or clamps. These locking means ensure a reliable position of the platform relative to the frame. Such locking means can be adapted to lock the platform in any direction, e.g. vertically or horizontally. In this way, the platform can be (temporarily) secured to the milking device and the lifting means are relieved of carrying the platform and any livestock on the milking device. Depending on the lifting means this saves energy.

Moreover, by locking the platform to the frame, the locking means stabilize the platform. Although the lifting means are arranged to change the position of the platform, they may not be optimized for stabilizing the platform in the loading, unloading or working position.

Preferably, the locking means are arranged to automatically lock the position of the platform to the frame.

Automated locking of the position contributes to a safe operation of the milking device as the locking does not depend on flawless operation by the personnel. Additionally, automated locking contributes to less workload to stabilize the platform as the personnel does not have to perform special actions to stabilize the platform.

The automatic locking may be triggered by reaching the working position or the at least one of the loading position and the unloading position or by the relative positions of the platform and the frame being stable for a longer period than a threshold period.

In another preferred embodiment, the milking device further comprises transporting means for transporting the milking device.

The transporting means may serve to reduce the resistance in transporting the milking device, e.g. may comprise one or more wheels, tracks, preferably equipped with braking means on the lower parts of the milking device. They may also comprise attachment means such as handles, hoisting eyes or grips to allow easy and efficient attachment of the milking device to other transporting means, e.g. cranes, hoists, etc. in order to transport the milking device to another location.

Because the ramps are not needed, the milking device is relatively compact, making the milking device easy to transport.

In another preferred embodiment, the milking device further comprises restriction means, at least partly surrounding the platform, for restricting the movement of the livestock with respect to the platform.

When the livestock is free to move on the platform, the weight distribution may change which may lead to load changes experienced by the lifting means. Restricting the movement of the livestock supported by and thus present on the platform by securing means surrounding the platform prevents load changes to the lifting means while in operation and also prevents the livestock supported by the platform from falling off of the platform. The restricting means may restrict the livestock from walking over the platform.

In another preferred embodiment, the restriction means are removable, foldable or hingably connected to the milking device.

The restriction means, or a part of the restriction means, might be (temporarily) removable, foldable or hingably connected to the milking device to arrange for maximum accessibility of the device to the livestock when entering or leaving the platform. These restriction means can for instance be in the form of a door or a part of the restriction means that can temporarily be lifted, wound or hinged, to a space above, in or below the platform. The movement of the restriction means can for instance be manually (by human operation) or for instance by hydraulic, electric or pneumatic removal means.

In another preferred embodiment, the milking device further comprises restriction locks, for locking the restriction means in a restricting, folded or upwardly hinged state.

The restriction locks, which may be similar to the locking means, serve in order to secure the restriction means in place. The restriction means ensure a secure fixation of the restriction means to the milking device. This can particularly be advantageous while the livestock is on the platform, or while transporting the milking device. The restriction means can be used the secure the fixation of the restriction means in folded or upwardly hinged state for allowing safe access for the livestock to the platform or to allow the livestock to safely leave the platform.

In another preferred embodiment, the milking means comprise a first milking unit and a second milking unit, arranged such that the first milking unit can be connected to a the teats of a first animal of the livestock and the second milking unit can simultaneously be connected to the teats of a second animal of the livestock while the platform is in the working position.

By using at least two milking units, such as, but not limited to clusters, multiple livestock animals may be milked simultaneously, increasing the efficiency in the use of the milking device.

In another preferred embodiment, the milking device comprises a personnel platform.

With the presence of a personnel platform, the personnel does not have to work while being supported by the surroundings of the milking device such as a floor, field or pasture, but by the personnel platform. Preferably, the personnel platform is optimized for instance with respect to anti-skid properties and drainage of rain. The personnel platform may therefore be gridded.

According to an embodiment of the invention, there is also provided a method of milking livestock comprising at least one set of steps of a collection of sets comprising:
- loading the livestock on a platform while the platform is in a loading position and changing the position of the platform to a working position and connecting milking units to the teats of the livestock; and
- disconnecting milking units from the teats of the livestock, changing the position of the platform to an unloading position and unloading the livestock from the platform.

Because the position of the platform changes between the loading position and the working position, or between the working position and the unloading position, the position of the livestock supported by the platform also changes.

A position wherein the milking means can be connected to the teats is also a position wherein the milking means can be disconnected from the teats.

Because the position of the livestock changes, the working position and the loading position or the unloading position are independent. Therefore, the need for a ramp is absent while the personnel can conveniently work with the milking means.

These and other features of the invention are further elucidated with reference to the accompanying drawings.
Figure 1 shows a perspective view of an embodiment of the milking device according to the invention in the working position.
Figure 2 shows a side view of another embodiment of the milking device according to the invention in the working position, accommodating livestock.
Figure 3A and 3B show a side view of another embodiment of the milking device according to the invention in respectively the working and the loading position.
Figure 4A, 4B show a side view of another embodiment of the milking device according to the invention in the loading and a position close to the unloading position, respectively.
Figure 5 shows a detail of a part of the device according to figure 1.
Figure 6 shows a side view of another embodiment of the milking device according to the invention in the working position, showing the restriction means when positioned in place and when hinged upward (dashed lines).
Figure 7 shows a top view of another embodiment of the milking device according to the invention, showing partially hingably connected restriction means.
Figure 8 shows a detailed top view of one corner of another embodiment of the milking device according to the invention, showing guiding means.

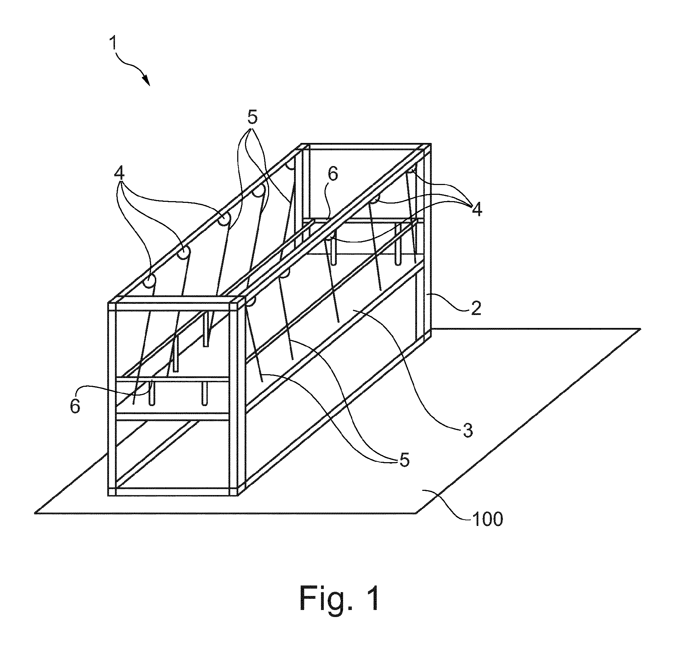

In **figure 1****,** a milking device (1) for milking livestock according to the invention is shown. The milking device (1) comprises a frame (2) and a platform (3) movably arranged within the frame (2). The position of the platform (3) relative to the position of the frame (2) can be changed by lifting means. In this embodiment, the lifting means comprise electric winches (4) with cables (5). The winches are arranged at the top of the frame (2) for electrically changing the position of the platform (3) to the frame (2). The cables (5) are connected at a free end to the platform (3).

The frame (2) is placed on a concrete floor (100). This placement may be performed by connecting hoisting means to the top of the frame (2). The top of the frame may comprise transporting means such as hoisting eyes for easy attachment (not shown). Alternatively, the frame may be rolled into position using wheels of the milking device (not shown).

In use, i.e. while milking the livestock, the personnel also stands on the floor (100) on which the frame (2) is placed. The position of the platform (3) can be changed between a loading position, corresponding to the lowest position in the frame (2), and a working position. The working position corresponds to a height of the platform (3) whereby the teats (10) of the livestock (9) are at a height (H) to the personnel (12) suitable for connecting the milking units (11) to the teats (10) of the livestock (12) with a reduced need to kneel. The height of the platform (3) may be such that the teats (10) of the livestock (9) are at elbow level to the personnel (12). As a rule of thumb, the platform (3) is at a height of approximately 95 to 100 cm from the floor (100) when used for supporting cows.

Restriction means, in this embodiment in the form of a rail (6) surround the platform (2), for restricting livestock (not shown in this figure) to the device (1).

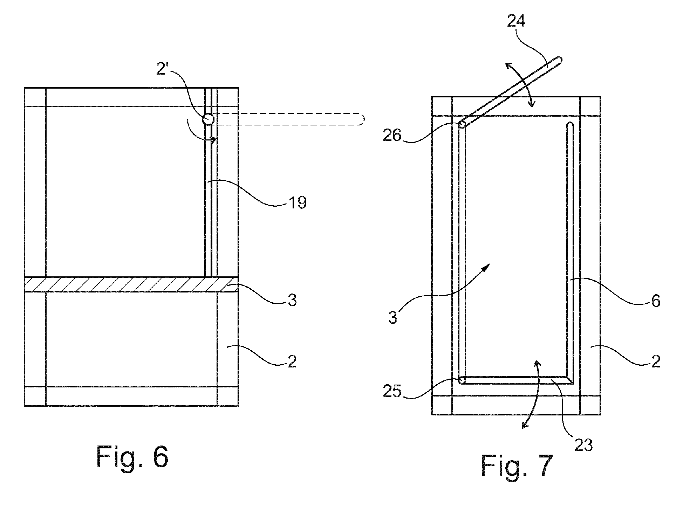

In use, the position of the platform (3) is first changed to a loading position. After removing a part of the restriction means (6), as will be further described with reference to **figure 6 and 7****,** the livestock (9) is allowed to enter the platform (3), after which the restriction means (6) are brought back in place. Electrically driven winches (4) on top of the frame (2) are used to elevate the platform (3) to a working position. **Figure 1** shows the platform in the working position. Then, the milking units (11) are connected to the teats (10) of the livestock (9) for milking the livestock (9). A milking unit (11) may be a cluster arranged to connect to all the teats (10) of one livestock (9) animal simultaneously, for instance all four teats (10) of a cow. The milking means of the milking device (1, 7, 13, 15) may comprise several milking units (11) to enable simultaneous milking of a plurality of livestock (9) animals.

After milking the livestock (9), the milking units (11) will be disconnected from the teats (10) of the livestock (9) and the platform (3) will be lowered to an unloading position, which may be equal to the loading position, using the winches (4). Subsequently, the restriction means (6) are again at least partially removed, in order to allow the livestock (9) to leave the platform (3).

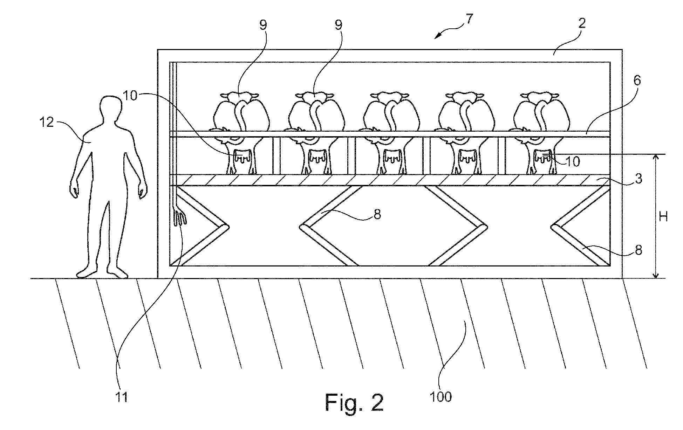

While the first embodiment uses winches (4) on top of the frame (2) to change the position of the platform (3) relative to the position of the frame (2), a second embodiment (shown in **figure 2****)** has multiple sets of two hydraulic arms (8), hingably connected between the platform (3) and the frame (2). In **figure 2****,** five cows are supported on the platform (3) as livestock (9). The animals of the livestock (9) each have teats (10) to which a milking unit (11) such as a cluster, can be connected in order to milk the livestock (9). **Figure 2** shows only one milking unit (11) (for instance a cluster), whereas a milking device (1, 7, 13, 15) generally comprises multiple milking units (11) for milking multiple cows (9) simultaneously and together they form a part of the milking means.

Because the teats (10) are at a height (H) from the ground level, the personnel (12) is able to connect the milking units (11) to the teats (10) of the livestock (9) with a reduced need to kneel.

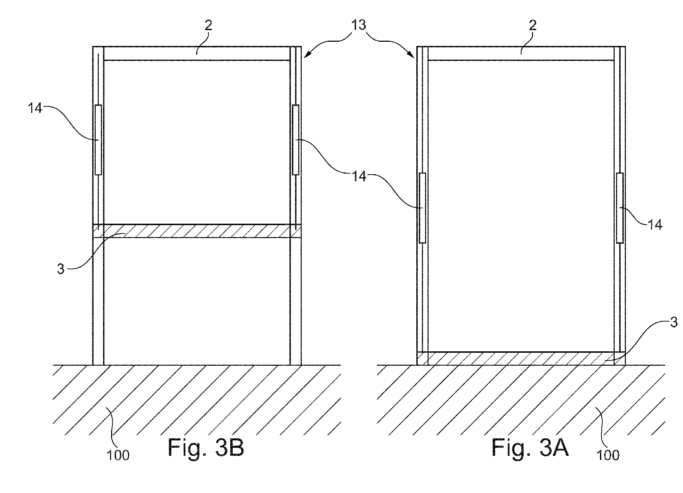

**Figure 3A and 3B** show another embodiment of a milking device (13) according to the invention. In this embodiment, a platform (3) is movably arranged relative to a frame (2) by hydraulic lifting means (14), connected between the platform (3) and a position at the frame (2) above the platform (3). In **figure 3A****,** the device (13) is shown in a loading position. After accommodating livestock (9) on the platform (3), the platform (3) can be lifted by the hydraulic lifting means (14) to a height above the floor (100) on which both the personnel and the frame stand. At this height the teats are at a height such that the milking units (11) (not shown) can conveniently be connected to the livestock (9) by the personnel (12) on that floor (100).

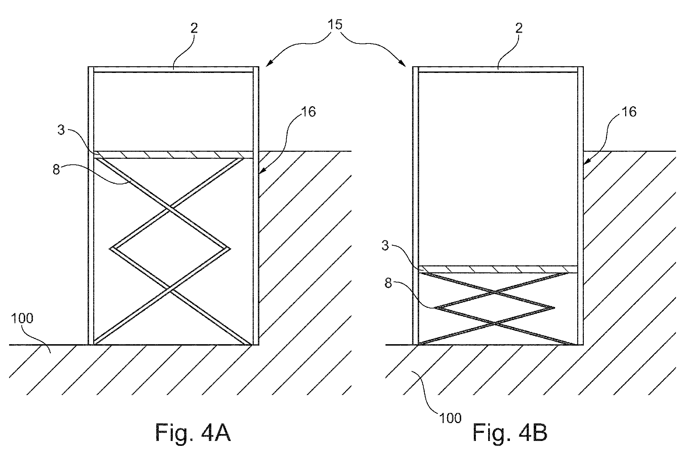

**Figure 4A and 4B** show yet another embodiment (15) of a milking device according to the invention. This embodiment (15) is similar to the milking device (1) of the second embodiment (shown in **figure 2****)** and also comprises hydraulic arms (8) to lift the platform (3). A difference is that this milking device (15) is placed adjacent to a rock wall (16). In this way, the livestock (9) can be supported on the platform (3) in a loading position, as shown in **figure 4A****.** The platform (3) can then be moved to a working position (not shown) in which personnel (12) can conveniently connect the milking means (11), to the teats (10) of livestock (9) supported on the platform (3). In the working position, the personnel (12) can also conveniently disconnect the milking units (11) from the teats (10) of the livestock (9). Finally the platform (3) can be moved to an unloading position by the hydraulic arms (8). The working position is in between the loading position and the unloading position. In **figure 4B****,** the device (15) is shown with the platform (3) nearly in the unloading position, in order to show a possible arrangement of the arms (8). By letting the livestock (9) leave the platform (3) at another level relative to the frame (2) compared to where it enters the platform, it may be easier to separate livestock (9) before milking and after milking. Alternatively, this advantageously accounts for height differences at the entrance and exit of the milking device (1, 7, 13, 15) in mountainous regions.

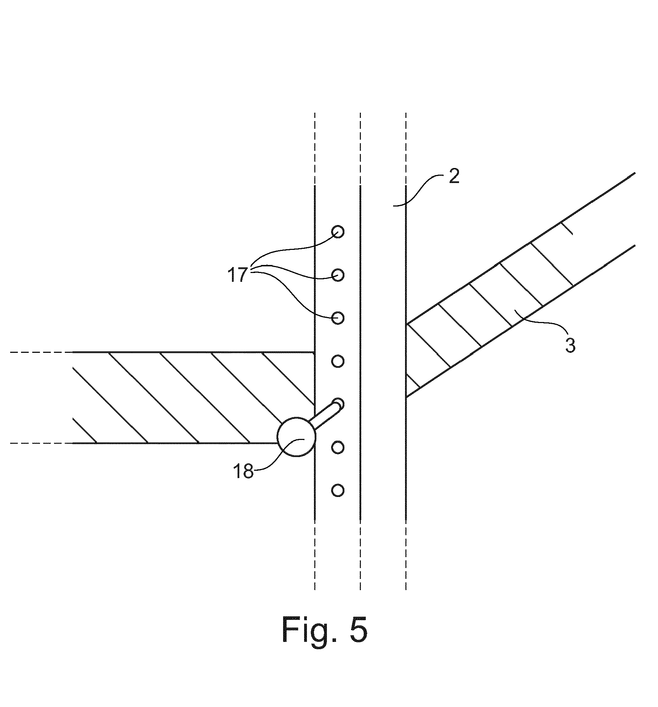

In order to lock the position of the platform (3) to the frame (2), the milking device (1, 7, 13, 15) may be equipped with locking means of which an example is shown in **figure 5****.** These locking means may serve to secure the platform (3) relative to a frame (2) in for instance the working position, the loading position or the unloading position. In this embodiment, four standing legs of the frame (2) each comprise a set of holes (17), through which pins (18) can be inserted, the pin (18) extending into holes (not shown) in the platform (3), to secure the platform (3) to the frame (2).

The restriction means (6) may be temporarily removable or foldable or hingably connected to the milking device (1, 7, 13, 15) in order to allow livestock (9) to enter or leave the platform (3). The milking device (1, 7, 13, 15) may comprise restriction locks (not shown), for instance on the non-removable, non-foldable or non-hingably connected parts of the restriction means (6) to lock the removable, foldable or hingably connected parts of the restriction means (6). Two examples of embodiments of removable or foldable restriction means (6) are shown in **figures 6 and 7****.**

In the first example **(****figure 6****),** the restriction means (6) comprise a fence (19), attached to the frame (2) and comprise a hinge (21), allowing the restriction means (6, 19) to be hinged upwardly (showed with dashed lines) by rotation of the hinge (21). In this way, the livestock (9) can enter the device (1, 7, 13, 15) without being restrained by the restriction means (6, 19).

In the second example **(****figure 7****),** the restriction means (6) comprise doors (23, 24), hingably connected to the other parts of the restriction means (6) by hinges (25, 26). In this second example, the first door (23) is shown when in its closed state, while the second door (24) is in its opened state.

These two examples are just examples of possibilities for removable, foldable or hingably connected restriction means (6). Alternatively, one of the doors (23, 24) may be hingably connected to the frame instead of other parts of the restriction means (6). Combinations of these examples are also possible, e.g. the restriction means (6) may comprise a door (21) and further comprise a part comprising a fence (19) connected via a hinge (21).

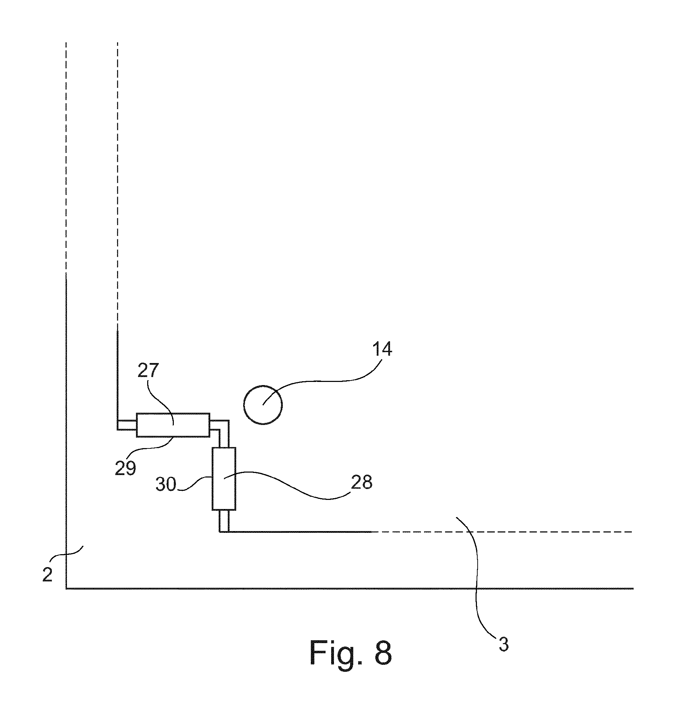

In order to guide the movement of the platform (3) relative to the frame (2), the frame may be provided with guiding means, such as wheels (27, 28), rotably attached to the frame (3), engaged in a rail (29, 30) **(****figure 8****).**

The frame (2) and the platform (3) of the milking device (1, 7, 13, 15) may be made of various materials or a combination of such materials, for instance, but not limited to, wood, steel, metal, etc.

Whereas a number of possible lifting means have been shown, various, and also other lifting means can be employed in the milking device to change the position of the platform. The lifting means can be placed or distributed in the milking device according to principles known to a person skilled in the art. For instance, the lifting means can be placed below or above the platform. In some embodiments, the lifting means might be such, for instance characterized by their capacity or arrangement in the device, that they are only able to change the position of platform over a path shorter than the dimensions of the device in such a direction. The various lifting means may be used in combination or independently.

The lifting means may be controlled in any suitable way, e.g. by a control panel, connected to the milking device, which may be (temporarily) withdrawable from the milking device, or by a device, in wireless contact with the milking device, such as a mobile phone or computer.

When not connected to the teats of livestock, one or more milking units may be at a fixed storage position on the milking device, but the storage position of one or more milking units may also be variable. The milking units may be connected to a pipe leading to a tank, wherein the connection is formed by a flexible hose.

Moreover, the milking device may be placed in the field which may become muddy. The milking device may comprise a personnel platform so that the personnel does not have to work while supported by, i.e. standing on, the muddy field. Additionally, the personnel platform may comprise a grid to have anti-skid properties. The milking device may also be arranged to change the position of the personnel platform, for instance by a similar mechanism as for the platform supporting livestock. This may be advantageous for instance to optimize the position of the personnel accounting for persons of the personnel with different lengths operating the milking device. It may also be advantageous to change the position of the personnel when the personnel desires to perform different tasks such as milking and inspecting the livestock. The personnel platform may be positioned close to a side of the platform for supporting the livestock proximate to where in use the teats of the livestock are.

While the invention disclosure describes the use of a platform and lifting means, it is also possible for a milking device according to the invention to comprise more than one platform for supporting livestock whereby the position of each platform may be changeable, e.g. mutually or independently. Any of the preferred embodiments may also be applied on one or more of those platforms.

## Claims

1. Milking device (1, 7, 13, 15) for milking livestock (9) whereby personnel (12) connects milking means (11) to teats (10) of the livestock (9) comprising:
- a platform (3) for supporting the livestock (9); and
- milking means (11), for milking the livestock (9)
**characterized by**
lifting means (4, 5, 8, 14), arranged for in use changing the position of the platform (3) between a working position at a height relative to the position of the personnel (12) suitable for the personnel (12) to connect the milking means (11) to the teats (10) and at least one of a loading position in which the livestock (9) can walk onto the platform (3) and an unloading position in which the livestock (9) can leave the platform (3).

2. Milking device (1, 7, 13, 15) according to claim 1,
wherein the lifting means (4, 5, 8, 14) comprise hydraulic, electric or pneumatic lifting means.

3. Milking device (1, 7, 13, 15) according to claim 1 or 2, wherein the milking device (1, 7, 13, 15) further comprises guiding means (27, 28, 29, 30), for guiding the platform (3) while changing the position.

4. Milking device (1, 7, 13, 15) according to any of the preceding claims, wherein the milking device (1, 7, 13, 15) further comprises locking means (17, 18) for locking the platform (3) to the frame (2) in the working position or the at least one of a loading position and an unloading position.

5. Milking device (1, 7, 13, 15) according to any of the preceding claims, wherein the milking device (1, 7, 13, 15) further comprises transporting means for transporting the milking device.

6. Milking device (1, 7, 13, 15) according to any of the preceding claims, wherein the device further comprises restriction means (6), at least partly surrounding the platform (3), for restricting the movement of the livestock (9) with respect to the platform (3).

7. Milking device (1, 7, 13, 15) according to claim 6,
wherein the restriction means (6) are removable, hingable or foldable.

8. Milking device (1, 7, 13, 15) according to claim 7,
wherein the milking device (1, 7, 13, 15) further comprises restriction locks, for locking the restriction means (6) in a restricting, folded or upwardly hinged state.

9. Milking device (1, 7, 13, 15) according to any of the preceding claims, wherein the milking means (11) comprise a first milking unit and a second milking unit, arranged such that the first milking unit can be connected to the teats (10) of a first animal of the livestock (9) and the second milking unit can simultaneously be connected to the teats (10) of a second animal of the livestock (9) while the platform (3) is in the working position.

10. Milking device (1, 7, 13, 15) according to any of the preceding claims, comprising a personnel platform.

11. Method of milking livestock (9) **characterized by** the method comprising at least one set of steps of a collection of sets comprising:
- loading the livestock (9) on a platform (3) while the platform (3) is in a loading position and changing the position of the platform (3) to a working position and connecting milking units (11) to the teats (10) of the livestock (9); and
- disconnecting milking units (11) from the teats (10) of the livestock (9), changing the position of the platform (3) to an unloading position and unloading the livestock (9) from the platform (3).
